# EUROPÄISCHE PATENTSCHRIFT

(11) **EP 2 553 537 B1**
(45) Veröffentlichungstag und Bekanntmachung des Hinweises auf die Patenterteilung: **29.07.2015**
(21) Anmeldenummer: 11735603.0
(22) Anmeldetag: 15.06.2011
(51) Int. Cl.: G05B 19/418, G05B 23/02, G06F 11/30

(54) **ÜBERWACHUNGS- UND DIAGNOSESYSTEM FÜR EIN FLUIDENERGIEMASCHINENSYSTEM SOWIE FLUIDENERGIEMASCHINENSYSTEM**
MONITORING AND DIAGNOSTIC SYSTEM FOR A FLUID ENERGY MACHINE SYSTEM AND FLUID ENERGY MACHINE SYSTEM
SYSTÈME DE CONTRÔLE ET DE DIAGNOSTIC POUR UN SYSTÈME DE MACHINE À ÉNERGIE FLUIDIQUE ET SYSTÈME DE MACHINE À ÉNERGIE FLUIDIQUE

(30) Priorität: 09.07.2010 DE 102010026678
(43) Veröffentlichungstag der Anmeldung: 06.02.2013
(73) Patentinhaber: Siemens Aktiengesellschaft, 80333 München (DE)
(72) Erfinder: KLÖPPNER, Gerd, 91083 Baiersdorf (DE)
(86) Internationale Anmeldenummer: PCT/EP2011/059934
(87) Internationale Veröffentlichungsnummer: WO 2012/004099

(56) Entgegenhaltungen:
- US-A1- 2008 183 427

## Beschreibung

Die Erfindung betrifft ein Überwachungs- und Diagnosesystem für ein Fluidenergiemaschinensystem, wobei das Fluidenergiemaschinensystem eine Vielzahl unterschiedlicher Subsysteme und Anlagenkomponenten aufweist. Ferner betrifft die Erfindung ein Fluidenergiemaschinensystem mit einem Überwachungs- und Diagnosesystem sowie ein Verfahren zur Überwachung und Diagnose eines Fluidenergiemaschinensystems.

Fluidenergiemaschinensysteme, wie elektrisch angetriebene Pumpen- und Kompressorsysteme, haben vielfältige Anwendungen in der Industrie, generell in der Prozessindustrie, insbesondere in der Öl- und Gas- Industrie, beispielsweise in Förderanlagen, Pipelines, Raffinerien, Tanklager, etc. Die kontinuierliche Instandhaltung und Wartung der Fluidenergiemaschinensysteme ist ein wesentlicher Bestandteil des Gesamtanlagenbetriebes, insbesondere im Hinblick auf Produktqualitäten, Energieeffizienz, Anlagenverfügbarkeit, Anlagensicherheit und Umweltschutz. Für die Überwachung solcher Systeme ist zum Beispiel aus der US 2008/0183427 bekannt, ausgewählte Subsysteme oder Anlagenkomponenten mit Sensoren zu versehen, welche hinsichtlich aktueller Messwerte ausgelesen werden.

Fluidenergiemaschinensysteme, wie insbesondere elektrisch angetriebene Pumpen- bzw. Kompressorsysteme, umfassen, aber sind nicht beschränkt auf, folgende Komponenten: eine oder mehrere Arbeitsmaschinen, wie Pumpen und/oder Kompressoren; Getriebe, Kupplungen, Rahmen; mechanische und/oder elektrische Drehzahlregelsysteme; Verrohrungen und Verkabelungen; Nebensysteme wie beispielsweise Schmierölsysteme, Sperrgassysteme, Instrumentierungsluftsysteme, Spülluftsysteme, Kühlsysteme, etc.; elektrische Motoren für den Hauptantrieb und andere Systemkomponenten; elektrotechnische Anlagen wie beispielsweise Schaltanlagen, Transformatoren, harmonische Filter, Blindleistungskompensatoren etc.; eine Instrumentierung und Automatisierung der Anlage und der Anlagen-Komponenten, incl. Softwareapplikationen, zum Beispiel zur Betriebsführung, Unternehmensführung, und Zustandsüberwachungskomponentenapplikationen.

Derzeit ist die Zustandsüberwachung einzelner diskreter oben genannter Systemkomponenten Stand der Technik. Obwohl spezielle Zustandsüberwachungssysteme bereits in einer Vielzahl von diskreten Anwendungen und Komponenten existieren, wie beispielsweise einer Schwingungs- und Lagertemperaturüberwachung für Pumpen, Kompressoren, Getriebe oder Motoren, ist eine ganzheitliche Überwachung eines Fluidenergiemaschinensystems, wie eines Pumpen- und/oder Kompressorensystems nicht realisiert. So ist es beispielsweise mit den bestehenden Zustandsüberwachungssystemen nicht möglich umgehend zu diagnostizieren, ob und in welchem Ausmaße elektrische Pendelmomente im Motor/Antriebsstrang, elektrische Umrichterdefekte, wie beispielsweise Zellenausfall, oder harmonische Verzerrungen im elektrischen Versorgungsnetz Einfluss auf den Prozess und die betreffende Arbeitsmaschine zeigen. Ferner ist ein Vergleich mit historisch ähnlichen Betriebsdaten eines Fluidenergiemaschinensystems nicht möglich.

Wie zuvor beschrieben, bestehen beispielsweise elektrisch angetriebene Pumpen- bzw. Kompressorsysteme aus verschiedenen mechanischen, elektrischen, automatisierungstechnischen Anlagenkomponenten. Insbesondere kritische Anlagenkomponenten wie beispielsweise Frequenzumrichter, Elektromotoren, Antriebsmaschinen, mechanische Antriebe, Transformatoren und Schaltanlagen, etc., sowie Nebenanlagen, wie beispielsweise Schmierölsysteme, Spülluftsysteme, Kühlsysteme, etc., und Automatisierungssysteme, wie beispielsweise eine Anlagen- oder Stationsautomatisierung, sind in der Regel mit diskreten Zustandsüberwachungssystemen und diskreten Anlagensystemen ausgestattet. Das bedeutet, für jede einzelne Anlagenkomponente existieren gesonderte Zustandsüberwachungssysteme und entsprechende Alarmsysteme. Parallel wird die Instandhaltung und Wartung des Pumpen- bzw. Kompressorsystems bzw. deren Anlagenkomponenten durch Instandhaltungs- und Wartungssoftwaresysteme, wie beispielsweise Betriebsführungssysteme, Unternehmensführungssysteme oder Fernwartungssysteme, unterstützt.

Die Zustandsüberwachung von einzelnen Komponenten eines Fluidenergiemaschinensystems, wie beispielsweise Pumpen- oder Kompressorstränge, ist Stand der Technik. So ist bekannt eine Zustandsüberwachung von Lagern, Gehäusen, Wicklungstemperaturen oder Maschinenschwingungen, etc., durchzuführen. Die Automatisierung eines Frequenzumrichters überwacht beispielsweise harmonische Verzerrungen, vergleicht diese aber nicht mit den Informationen der Zustandsüberwachung des Pumpen- oder Kompressorstranges oder anderer aktueller oder historischer Prozessdaten des Prozesses und der Nebenanlagen. Demzufolge kann beispielsweise der Einfluss von elektrisch induzierten Pendelmomenten in Elektromotoren auf die Strangvibrationen oder auch anderen relevanten Anlagenkomponentenbedingungen nicht automatisch und systematisch analysiert und klassifiziert werden.

Aufgabe der Erfindung ist es daher, ein Überwachungs- und Diagnosesystem für Fluidenergiemaschinensysteme, ein Fluidenergiemaschinensystem sowie ein Verfahren zur Überwachung und Diagnose eines Fluidenergiemaschinensystems zu schaffen, das eine systemübergreifende ganzheitliche Überwachung und Diagnose des Fluidenergiemaschinensystems ermöglicht. Durch eine ganzheitliche Systemüberwachung und -diagnose soll der Kenntnisstand und das Wissen über den aktuellen Anlagenzustand eines Fluidenergiemaschinensystems und deren Einzelkomponenten wesentlich erweitert und verbessert werden.

Diese Aufgabe wird erfindungsgemäß durch ein Überwachungs- und Diagnosesystem für ein Fluidenergiemaschinensystem mit den Merkmalen gemäß dem unabhängigen Patentanspruch 1, durch ein Fluidenergiemaschinensystem mit einem Überwachungs- und Diagnosesystem mit den Merkmalen gemäß Patentanspruch 8 sowie durch ein Verfahren zur Überwachung und Diagnose eines Fluidenergiemaschinensystems mit den Merkmalen gemäß Patentanspruch 11 gelöst. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Überwachungs- und Diagnosesystem beschrieben sind selbstverständlich auch im Zusammenhang mit dem erfindungsgemäßen Fluidenergiemaschinensystem und dem erfindungsgemäßen Verfahren zur Überwachung und Diagnose eines Fluidenergiemaschinensystems, und jeweils umgekehrt, so dass bezüglich der Offenbarung zu den einzelnen Erfindungsaspekten stets wechselseitig Bezug genommen wird.

Gemäß dem ersten Aspekt der Erfindung wird die Aufgabe durch ein Überwachungs- und Diagnosesystem für ein Fluidenergiemaschinensystem, wobei das Fluidenergiemaschinensystem eine Vielzahl unterschiedlicher Subsysteme und Anlagenkomponenten aufweist, gelöst. Das Überwachungs- und Diagnosesystem ist erfindungsgemäß dadurch gekennzeichnet, dass dieses eine zentrale Rechnereinheit aufweist, dass jedes Subsystem und jede Anlagenkomponente über standardisierte bidirektionale Schnittstellen und über eine oder mehrere Datenleitungen mit der zentralen Rechnereinheit zur Datenkommunikation verbunden ist, dass jedes Subsystem und jede Anlagenkomponente wenigstens ein Sensorelement zur Ermittlung von Zustandsdaten des jeweiligen Subsystems und der jeweiligen Anlagenkomponente aufweist, dass wenigstens eine Steuereinrichtung zur Ansteuerung der Sensorelemente vorgesehen ist, dass eine Speichereinrichtung zur Speicherung der ermittelten Zustandsdaten des jeweiligen Subsystems und der jeweiligen Anlagenkomponente sowie zur Speicherung von Vergleichsdaten zum Betreiben des Fluidenergiemaschinensystems vorgesehen ist, dass eine Komparatoreinheit zum Vergleich der ermittelten Zustandsdaten des jeweiligen Subsystems und der jeweiligen Anlagenkomponente mit definierten Schwellwerten für jedes Subsystem und jede Analgenkomponente vorgesehen ist und dass eine Anzeigeeinrichtung zur Anzeige der ermittelten Zustandsdaten des jeweiligen Subsystems und der jeweiligen Anlagenkomponente sowie zur Anzeige eines Alarmes bei Unter- oder Überschreitung eines Schwellwertes bei einem Subsystem oder einer Analgenkomponente vorgesehen ist. Ein derartiges Überwachungs- und Diagnosesystem für ein Fluidenergiemaschinensystem, wie beispielsweise ein elektrisch angetriebenes Pumpen- oder Kompressorsystems, ermöglicht eine ganzheitliche Systemüberwachung und eine Bereitstellung von Klassifizierungen, zum Beispiel vom Zustand und der Effizienz des Gesamtsystems. Das Überwachungs- und Diagnosesystem ermöglicht eine aktuelle, historische oder in die Zukunft projezierte ganzheitliche quantitative Diagnose und/oder Analyse des Fluidenergiemaschinensystems. Das gesamtumfassende Überwachungs- und Diagnosesystem kann beispielsweise die System/Anlagenauslastung, und damit die Kapitalnutzung, durch aktuelle Kennzahlenberechnungen und -anzeige der Systemleistung und Systemeffizienz erhöhen. Ferner kann durch die ganzheitliche Systemdiagnose des Fluidenergiemaschinensystems die Systemverfügbarkeit erhöht werden. Hierdurch kann eine Minimierung der ungeplanten Stillstandskosten, eine Reduzierung der geplanten Stillstandskosten und eine Reduzierung der Ersatzteillagerkosten ermöglicht werden. Das Überwachungs- und Diagnosesystem unterstützt, fördert und erleichtert beispielsweise die betriebliche zustandsbasierte Instandhaltung des Fluidenergiemaschinensystems. Ferner ermöglicht das Überwachungs- und Diagnosesystem durch kontinuierliches frühzeitiges Erkennen von Schwachstellen im Prozess und den Anlagenkomponenten eine erhöhte Systemsicherheit einen verbesserten Beitrag zum Umweltschutz und zum Arbeitsschutz. Des Weiteren wird durch das erfindungsgemäßes Überwachungs- und Diagnosesystem eine kostengünstige Lösung für die zustandsbasierte Instandhaltung und die Fernwartung, inkl. der Auswertung größerer Datenmengen und die betriebliche Wissensgenerierung, ermöglicht. Das Überwachungs- und Diagnosesystem unterstützt die Überwachung und zustandsbasierte Klassifizierung insbesondere der kritischen Subsysteme und Anlagenkomponenten des Fluidenergiemaschinensystems.

Das Fluidenergiemaschinensystem weist eine Vielzahl unterschiedlicher Subsysteme und Anlagenkomponenten auf. So kann das Fluidenergiemaschinensystem beispielsweise als Anlagenkomponenten eine oder mehrere Arbeitsmaschinen, wie Pumpen oder Kompressoren, Getriebe, Kupplungen, Rahmenelemente, mechanische und/oder elektrische Drehzahlregelungen, Verrohrungen und Verkabelungen, sowie elektrische Motoren für den Hauptantrieb oder andere Komponenten, elektrotechnische Anlagen wie beispielsweise Schaltanlagen, Transformatoren, harmonische Filter, Blindleistungskompensatoren, Instrumentierungen, sowie Nebensysteme wie Schmierölsysteme, Sperrgassysteme, Instrumentierungsluftsysteme, Spülluftsysteme oder Kühlsysteme aufweisen. Das heißt, dass in das Fluidenergiemaschinensystem integrierte Überwachungs- und Diagnosesystem integriert und ergänzt bestehende Subsysteme, wie beispielsweise Automatisierungssysteme, insbesondere Anlagenkomponenten, Nebenanlagenkomponenten, Frequenzumrichter, Schaltanlagen, Motorsteuereinheiten, sowie Zustandsüberwachungssysteme für beispielsweise rotierende Maschinen, Instandhaltungs-, Betriebsführungs-, Unternehmensplanungssoftwaresysteme. Das Überwachungs- und Diagnosesystem ermöglicht die zeitnahe Unterstützung der Betriebsführung, insbesondere auch der Instandhaltung in Hinblick auf zustandsbasierte und vorausschauende Betriebsführungs- und Instandhaltungsstrategien.

Das Überwachungs- und Diagnosesystem für ein Fluidenergiemaschinensystem, welches eine Vielzahl unterschiedlicher Subsysteme und Anlagenkomponenten umfasst, weist eine zentrale Rechnereinheit auf. Jedes Subsystem und jede Anlagenkomponente des Fluidenergiemaschinensystems ist über standardisierte bidirektionale Schnittstellen und über eine oder mehrere Datenleitungen bzw. Datenverbindungen mit der zentralen Rechnereinheit zur Datenkommunikation verbunden. Jedes Subsystem und jede Anlagenkomponente des Fluidenergiemaschinensystems weist wenigstens ein Sensorelement zur Ermittlung von Zustandsdaten des jeweiligen Subsystems bzw. der jeweiligen Anlagenkomponente auf. Das Überwachungs- und Diagnosesystem weist ferner eine Steuereinrichtung, die mit der zentralen Rechnereinheit verbunden ist, insbesondere Teil der zentralen Rechnereinheit ist, zur Ansteuerung der Vielzahl der Sensorelemente auf. Eine Speichereinrichtung dient zur Speicherung der ermittelten Zustandsdaten des jeweiligen Subsystems und der jeweiligen Anlagenkomponente, sowie zur Speicherung von Vergleichsdaten zum Betreiben des Fluidenergiemaschinensystems. In einer Komparatoreinheit des Überwachungs- und Diagnosesystems ist ein Vergleich der ermittelten Zustandsdaten des jeweiligen Subsystems und der jeweiligen Anlagenkomponente mit definierten Schwellwerten für jedes Subsystem und jede Anlagenkomponente, insbesondere ein Vergleich mit bekannten Daten zum Betreiben eines Fluidenergiemaschinensystems, möglich. Des Weiteren ist eine Anzeigeeinrichtung zur Anzeige der ermittelten Zustandsdaten des jeweiligen Subsystems und der jeweiligen Anlagenkomponente sowie zur Anzeige eines Alarms bei Unter- oder Überschreitung eines Schwellwertes bei einem Subsystem oder einer Anlagenkomponente vorgesehen. Das heißt, das Überwachungs- und Diagnosesystem ermöglicht ein Datensammeln und eine Datenspeicherung in einer Speichereinrichtung, insbesondere in Datenbanken, sowie eine Datenverarbeitung der gesammelten, insbesondere zeitgestempelten, Daten und Alarme, zur Analyse und zur Diagnose, beispielsweise basierend auf Zeitreihen, Prozessmodellen, speziellen Kennzahlen usw. im Überwachungs- und Diagnosesystem. Ferner ist eine Archivierung der gesammelten Daten zur Analyse und Diagnose im Überwachungs- und Diagnosesystem möglich. Durch einen Vergleich der ermittelten Zustandsdaten mit historischen Fahrweisen für ein Fluidenergiemaschinensystem kann rechtzeitig eine ganzheitliche Aussage über den Zustand des Fluidenergiemaschinensystems getroffen werden.

Gemäß einer bevorzugten Weiterentwicklung der Erfindung kann bei dem Überwachungs- und Diagnosesystem vorgesehen sein, dass die zentrale Rechnereinheit kabelgebundene oder kabellose Schnittstellen zur Vorort- und/oder Fernansteuerung der zentralen Rechnereinheit aufweist. So kann beispielsweise ein Anlagenfahrer oder ein Instandhaltungs- und Wartungspersonal über eine Eingabeeinheit, beispielsweise eine Tastatur, eine Vorortansteuerung der zentralen Rechnereinheit, bzw. der der zentralen Rechnereinheit zugeordneten Steuereinrichtung, durchführen. Alternativ oder zusätzlich unterstützt das Überwachungs- und Diagnosesystem die Unterstützung einer Fernansteuerung der zentralen Rechnereinheit. Vorzugsweise sind daher bei dem Überwachungs- und Diagnosesystem zur Datenkommunikation zwischen den jeweiligen Subsystemen sowie den jeweiligen Anlagekomponenten und der zentralen Rechnereinheit Internetprotokolle, Interfaces und/oder Bussysteme vorgesehen. Beispielsweise können entsprechende Interfaces und Protokolle, wie beispielsweise das TCP/IP Netzwerkprotokoll, sowie Profibus-, Feldbus-, CAN-Bus-, Modbussysteme, aber auch direkte analoge Kabelverbindungen vorgesehen sein. Durch die Bereitstellung der erforderlichen Schnittstellen und Protokolle zur Integration der Subsysteme sowie der Anlagekomponenten sind keine proprietären aufwendigen Anpassungen zur Überwachung und Diagnose des Fluidenergiemaschinensystems erforderlich.

Die zentrale Rechnereinheit kann unmittelbar Teil des Fluidenergiemaschinensystems sein, sie kann aber auch beabstandet zu dem Fluidenergiemaschinensystem angeordnet sein. Bevorzugt ist die Steuereinrichtung des Überwachungs- und Diagnosesystems zur Ansteuerung der Sensorelemente mit der zentralen Rechnereinheit direkt verbunden.

Gemäß einer besonders bevorzugten Weiterentwicklung der Erfindung kann bei dem Überwachungs- und Diagnosesystem vorgesehen sein, dass die Komparatoreinheit eine Analyseeinrichtung zur Betrachtung von ermittelten Zustandsdaten wenigstens eines Subsystems oder wenigstens einer Anlagenkomponente relativ zu anderen Subsystemen oder Anlagenkomponenten des Fluidenergiemaschinensystems aufweist. Die Analyseeinrichtung ermöglicht eine Diagnose des Fluidenergiemaschinensystems durchzuführen. Insbesondere kann eine Diagnose zur Empfehlung oder Benachrichtigung auf einer abgestimmten systemübergreifenden Basis, beispielsweise von Zeitstrahlen, Betriebsmodi und Anlagenfahrweisen, mittels Analyse und Korrelation der Subsysteme und Anlagenkomponenten durchgeführt werden. Dies ermöglicht die ganzeinheitliche Zustandsüberwachung und zustandsbasierte Klassifizierung des Fluidenergiemaschinensystems, insbesondere des Pumpen- und Kompressorsystems. Die Komparatoreinheit bzw. Analyseeinrichtung ermöglicht die Berechnung aktueller zustandsabhängiger Kennzahlen und unterstützt die zustandsbasierte vorausschauende Instandhaltung des Fluidenergiemaschinensystems. Die Analyseeinrichtung ermöglicht die Analyse des Fluidenergiemaschinensystems, insbesondere der Subsysteme und Anlagenkomponenten, beispielsweise mittels modellgestützter Bewertungen unter Berücksichtigungen historischer Betriebs- und Fehlerszenarien. Das Heranziehen von Diagnosemodellen zur Zustandsüberwachung ermöglicht die Kodierung von Anlagewissen und kontinuierliche angepasste Anwendung einer Anlage. Das Überwachungs- und Diagnosesystem kann beispielsweise durch eine ganzheitliche übergreifende Analyse und Klassifizierung sowie Überwachung von beispielsweise Stromnetzstörungen, Kühlmittelständen, Filterverschmutzungen, Verstopfungen von Rohrleitungen, etc. durchführen, um weitergehende fatale Anlagenausfälle vorausschauend zu vermeiden. Durch die kontinuierliche ganzheitliche Systemüberwachung und -klassifizierung wird das Wissen über den aktuellen Anlagezustand und der Anlagekomponenten wesentlich erweitert. Zum Beispiel ermöglicht der Vergleich und die Korrelation von Betriebsmodi und -perioden gegen die Verfügbarkeit und Zuverlässigkeit von Anlagekomponenten und -systemen die quantitative Möglichkeit die mittlere störungsfreie Betriebszeit und die Ausfallkriterien kontinuierlich zu aktualisieren.

Bevorzugt ist ferner ein Überwachungs- und Diagnosesystem, bei dem die Anzeigeeinrichtung zur akustischen und/oder optischen Anzeige eines Alarms ausgebildet ist.

Ferner ist eine Überwachungs- und Diagnosesystem bevorzugt, bei dem die Rechnereinheit zur Erstellung von elektronischen Telegrammen ausgebildet ist. Das heißt, bei Überschreitung- oder Unterschreitung definierter Schwellwerte kann das Überwachungs- und Diagnosesystem Warnungen und Alarme auslösen und elektronische Telegramme, beispielsweise zur Information von Anlagefahrern, Instandhaltungspersonal, Wartungspersonal oder zur Einkopplung von Betriebs- und Unternehmensführungssystemen erzeugen.

Gemäß einem zweiten Aspekt der Erfindung wird die Aufgabe durch ein Fluidenergiemaschinensystem mit einem Überwachungs- und Diagnosesystem, welches gemäß dem ersten Aspekt der Erfindung ausgebildet ist gelöst, wobei das Fluidenergiemaschinensystem eine Vielzahl unterschiedlicher Subsysteme und Anlagenkomponenten aufweist und jedes Subsystem und jede Anlagenkomponente jeweils wenigstens ein Sensorelement zur Ermittlung von Zustandsdaten des jeweiligen Subsystems und der jeweiligen Anlagenkomponenten aufweist. Ein derart ausgebildetes Fluidenergiemaschinensystem ermöglicht die ganzheitliche Überwachung des Fluidenergiemaschinensystems. Die Zustandsdaten eines Subsystems oder einer Anlagenkomponente können zur Überwachung des Gesamtsystems herangezogen werden. Das Fluidenergiemaschinensystem umfasst vorzugsweise eine Fluidenergiemaschine, wie beispielsweise einen Verdichter, eine Pumpe oder einen Kompressor, sowie eine Wellenkupplung, einen elektrischen Motor mit einer Motorsteuereinheit, einen Frequenzumrichter und/oder eine Umspannstation, beispielsweise mit Schaltanlagen und Transformatoren. Ferner können Getriebe, Kupplungen, Rahmenelemente mechanisch und/oder elektrische Drehzahlregelungen, Verrohrungen und Verkabelungen sowie elektrotechnische Anlagen, wie beispielsweise Schaltanlagen, Transformatoren, harmonische Filter, Blindleistungskompensatoren und Automatisierungssysteme vorgesehen sein. Des Weiteren ist ein Fluidenergiemaschinensystem bevorzugt, das als Subsystem ein Schmierölsystem, ein Spülluftsystem, ein Sperrgassystem, Instrumentierungsluftsysteme, und/oder wenigstens ein Kühlsystem aufweist.

Gemäß einem dritten Aspekt der Erfindung wird die Aufgabe durch ein Verfahren zur Überwachung und Diagnose eines Fluidenergiemaschinensystems, wobei das Fluidenergiemaschinensystem eine Vielzahl unterschiedlicher Subsysteme und Anlagenkomponenten aufweist, mittels eines Überwachungs- und Diagnosesystems, welches gemäß dem ersten Aspekt der Erfindung ausgebildet ist, gelöst.

Das Verfahren zur Überwachung und Diagnose eines Fluidenergiemaschinensystems ist insbesondere dadurch gekennzeichnet, dass eine zentrale Rechnereinheit über standardisierte bidirektionale Schnittstellen und über eine oder mehrere Datenleitungen bzw. Datenverbindungen mit jedem Subsystem und jeder Anlagenkomponente kommuniziert, wobei das wenigstens eine Sensorelement der jeweiligen Subsysteme sowie der jeweiligen Anlagenkomponenten von wenigstens einer Steuereinrichtung, die mit der zentralen Rechnereinheit verbunden ist, zur Ermittlung von Zustandsdaten des jeweiligen Subsystems und der jeweiligen Anlagenkomponenten angesteuert werden, dass die von den jeweiligen Sensorelementen ermittelten Zustandsdaten der jeweiligen Subsysteme und der jeweiligen Anlagenkomponenten sowie Vergleichsdaten zum Betreiben des Fluidenergiemaschinensystems in einer Speichereinrichtung gespeichert werden, dass die Komparatoreinheit die ermittelten Zustandsdaten des jeweiligen Subsystems und der jeweiligen Anlagenkomponente mit definierten Schwellwerten für jedes Subsystem und jede Anlagenkomponente vergleicht, und dass eine Anzeigeneinrichtung die ermittelten Zustandsdaten des jeweiligen Subsystems und der jeweiligen Anlagenkomponente sowie einen Alarm bei Unter- oder Überschreitung eines Schwellwertes bei einem Subsystem oder einer Anlagenkomponenten anzeigt.

Das insbesondere kontinuierliche Fern- und/oder Vorort- Überwachungs- und Diagnosesystem für ein Fluidenergiemaschinensystem, insbesondere für ein elektrisch angetriebenes Pumpen- bzw. Kompressorsystems, sammelt, zeichnet auf und archiviert Daten und Informationen, beispielsweise Alarme, über die Subsysteme und Anlagenkomponenten, um unter Anderem modellgestützt zu analysieren, Trendkurven und Korrelationen/Kreuzkorrelationen zu erstellen und objektive Kennzahlen bezüglich des aktuellen Zustandes des Fluidenergiemaschinensystems, insbesondere des Pumpen oder Kompressorsystems mittels kontinuierlicher Systemüberwachung und zustandsbasierter Klassifizierung von Zustand und Effizienz des Gesamtsystems bereitzustellen. Hierdurch wird die quantitative Diagnose und/oder Analyse des Gesamtsystems ermöglicht. In der Regel kommt das Überwachungs- und Diagnosesystem mit den bereits installierten Instrumentierungen, insbesondere Sensorelementen, aus. Zusätzliche Sensorelemente zur Diagnose sind bei Bedarf jederzeit in das Überwachungs- und Diagnosesystem integrierbar. Das einheitliche Überwachungs- und Diagnosesystem für ein Fluidenergiemaschinensystem ermöglicht insbesondere die Erhöhung der System/Anlagenauslastung, und damit die Kapitalnutzung, durch aktuelle Kennzahlenberechnungen und -anzeigen der Systemleistungen und der Systemeffizienz. Das Überwachungs- und Diagnosesystem erhöht durch eine kontinuierliche Gesamtsystemdiagnose die System/Anlagenverfügbarkeit. Beispielsweise kann durch das Überwachungs- und Diagnosesystem die betriebliche zustandsbasierte Instandhaltung unterstützt, gefördert und erleichtert werden. Insbesondere kann durch das Überwachungs- und Diagnosesystem bzw. das Verfahren zur Überwachung und Diagnose für ein Fluidenergiemaschinensystem eine Minimierung der ungeplanten Stillstandskosten, eine Reduzierung der geplanten Stillstandskosten sowie eine Reduzierung der Ersatzteillagerkosten erreicht werden. Ferner kann die System/Anlagensicherheit sowie ein verbesserter Umweltschutz durch frühzeitiges Erkennen von Schwachstellen im Prozess und den Anlagekomponenten kontinuierlich gewährleistet werden. Des Weiteren wird durch das Überwachungs- und Diagnosesystem eine kostengünstige Lösung für die zustandsbasierte Instandhaltung und Fernwartung, inkl. einer Auswertung größerer Datenmengen und betriebliche Wissensgenerierung, ermöglicht. Das umfassende Überwachungs- und Diagnosesystem ermöglicht eine ganzheitliche Überwachung der Prozess- und Betriebsbedingungen, der mechanischen, elektrischen, automatisierungstechnischen Anlagekomponenten bzw. Subsysteme. Beispielsweise kann durch das Überwachungs- und Diagnosesystem diagnostiziert werden, ob und in welchem Ausmaße elektrisch induzierte Pendelmomente im Motor/Antriebsstrang, elektrische Umrichterdefekte, beispielsweise Zellenausfall, oder harmonische Verzerrungen im elektrischen Versorgungsnetz und die betreffende Arbeitsmaschine zeigen. Das Überwachungs- und Diagnosesystem unterstützt die Überwachung und zustandsbasierte Klassifizierung insbesondere der kritischen Anlagenkomponenten des Fluidenergiemaschinensystems, vorzugsweise des Pumpen- bzw. Kompressorsystems. Das Überwachungs- und Diagnosesystem basiert vorteilhafterweise sowohl auf analytischen als auch empirischen Modellen, Heuristiken, Trendkurven von Prozess- und Systemdaten, Prozess- und Systemalarmen sowie auch x, y- und 6-Sigma-Diagrammen. Das Überwachungs- und Diagnosesystem kann Warnungen und Alarme in Form von elektronischen Telegrammen, insbesondere über das Gesamtsystem, für Anlagenfahrer, Instandhaltungs- und Wartungspersonal bereitstellen. Die Instandhaltungsprogramme sind vorzugsweise in das Überwachungs- und Diagnosesystem integriert. So können beispielsweise Anlagenkomponenten automatisch in Hinblick auf Betriebs- und Instandhaltungszustand klassifiziert werden. Inspektionstermine können kontinuierlich automatisch angepasst und für beispielsweise elektrische, automatisierungstechnische, mechanische Anlagenkomponenten, Instrumentierungen und Stellgliedern sowie Nebenanlagen aktualisiert werden. Dies stellt eine sogenannte vorbeugende Instandhaltung dar. Ferner können explizite Hinweise und Empfehlungen bei detektierten absehbaren kurz-/langfristigen Ausfällen von Anlagenkomponenten und damit absehbaren Abweichungen von geplanten Inspektionsplänen generiert werden. Das Diagnose-System unterstützt sowohl die Diagnose Vorort und/oder die Ferndiagnose.

Das umfassende, ganzheitliche Überwachungs- und Diagnosesystem ermöglicht die Integration von kritischen Anlagenkomponenten, wie beispielsweise von Frequenzumrichtern, Elektromotoren, Antriebsmaschinen, mechanischen Antrieben, Transformatoren und Schaltanlagen, etc., von Nebenanlagen, wie beispielsweise Schmierölsystemen, Spülluftsystemen, Kühlsystemen, etc., und von Automatisierungssystemen, wie beispielsweise Anlagen-, Stationsautomatisierungen. Das ganzheitliche Überwachungs- und Diagnosesystem ermöglicht gleichzeitig die Instandhaltung und Wartung der Anlage und der Anlagenkomponenten durch Instandhaltungs- und Wartungssoftwaresysteme, wie Betriebsführungssysteme, Unternehmensführungssysteme, Fernwartungssysteme. Durch die Integration aller Subsysteme und Anlagenkomponenten zur Diagnose und Analyse des gesamten Pumpen-und Kompressorsystems, können beispielsweise Korrelationen/Kreuzkorrelationen, zustandsbasierte modelbasierte Klassifizierungen etc., für vorausschauende Instandhaltungsstrategien durchgeführt werden.

Die Zustandsüberwachung von Pumpen- und Kompressorsträngen erfolgt nunmehr mit sämtlichen Prozessdaten, wie Temperaturen, Mengen und Qualitäten, Nebenanlagenmessungen und den elektrischen und automatisierungstechnischen Komponenten. Die Automatisierung des Frequenzumrichters überwacht harmonische Verzerrungen und vergleicht diese nunmehr mit den Informationen der Zustandsüberwachung des Stranges oder anderer aktueller oder historischer Prozessdaten des Prozesses und der Nebenanlagen. Demzufolge kann der Einfluss von elektrisch induzierten Pendelmomenten in Elektromotoren auf die Strangvibrationen oder auch anderen relevanten Anlagenkomponentenbedingungen nunmehr automatisch und systematisch analysiert und klassifiziert werden. Dies ermöglicht das ganzheitliche Überwachungs- und Diagnosesystem, insbesondere durch ganzheitliche Analyse und aktuelle/kurzfristige/langfristige Bewertung des Zustandes und der Effizienz von insbesondere kritischen Pumpen- und Kompressoranlagenkomponenten. Das ganzheitliche Überwachungs- und Diagnosesystem ermöglicht das Sammeln, Aufzeichnen, Archivieren sämtlicher Daten und Information von allen Subsystemen und Anlagekomponenten in einer zentralen Speichereinrichtung beziehungsweise Ablage sowie die Analyse und Klassifizierung zur Diagnose. Der Zugriff auf das hier beschriebene Überwachungs- und Diagnosesystem kann sowohl lokal als auch von außerhalb, das heißt per Ferndiagnose, erfolgen.

Das kontinuierliche Fern- und/oder Vorort-Überwachungs- und Diagnosesystem für Fluidenergiemaschinensysteme, wie elektrisch angetriebene Pumpen- bzw. Kompressorensysteme, integriert und ergänzt bestehende Subsysteme, wie beispielsweise Automatisierungssysteme, wie Stationen, Anlagen, Anlagenkomponenten, Nebenanlagen, Frequenzumrichter, Schaltanlagen, Motorsteuereinheiten, etc., mit Zustandsüberwachungssystemen für rotierende Maschinen, Instandhaltungs-, Betriebsführungs-, Unternehmensplanungssoftwaresysteme, etc.. Das erfindungsgemäße Überwachungs- und Diagnosesystem ermöglicht die zeitnahe Unterstützung der Betriebsführung, insbesondere auch der Instandhaltung in Hinblick auf zustandsbasierte und vorausschauende Betriebsführungs- und Instandhaltungsstrategien.

Das Überwachungs- und Diagnosesystem für ein Fluidenergiemaschinensystem umfasst insbesondere standardisierte bidirektionale Schnittstellen zur Kommunikation mit den Subsystemen und Anlagekomponenten, beispielsweise zur Daten- und Alarmübertragung. Entsprechende Interfaces und Protokolle, insbesondere TCP/IP-Protokolle, Profibusse, Feldbusse, Modbusse, direkte analoge Kabelverbindungen, etc., werden von dem Überwachungs- und Diagnosesystem bereitgestellt. Das Datensammeln und die Datenspeicherung erfolgt in einer Speichereinrichtung der zentralen Rechnereinheit beziehungsweise in Datenbanken, Dies erfolgt entweder online und in Echtzeit oder ereignisgesteuert mit angepassten Abtastraten im Überwachungs- und Diagnosesystem. Die Datenverarbeitung der gesammelten zeitgestempelten Daten und Alarme zur Analyse und zur Diagnose erfolgt basierend auf Zeitreihen, Prozessmodellen, speziellen Kennzahlen usw. im Überwachungs- und Diagnosesystem. Ferner erfolgt in der Speichereinrichtung der zentralen Rechnereinheit des Überwachungs- und Diagnosesystems eine Archivierung der gesammelten Zeitreihen zur Analyse und Diagnose. Das Überwachungs- und Diagnosesystem ermöglicht ferner eine applikationsgestützte Analyse der archivierten Zeitreihen und Alarme zur Diagnose auch im Vergleich zu historischen Fahrweisen. Über die Sensorelemente kann ein direkter Zugriff auf aktuelle Kennzahlen, insbesondere bezüglich Anlagenzustände und- effizienz, erfolgen. Das Überwachungs- und Diagnosesystem ist ferner ausgebildet zur automatischen Erstellung elektronischer Telegramme für lokales und/oder Fern-Wartungs- und Servicepersonal, aber auch für elektronische Betriebsführungssysteme mittels des Überwachungs- und Diagnosesystems. Das erfindungsgemäße Überwachungs- und Diagnosesystem erlaubt sowohl lokale als auch Fern-Zugriffe. Beispielsweise ermöglicht das subsystemübergreifende Überwachungs- und Diagnosesystem die zeitnahe und zeitkonsistente Analyse und Archivierung der Zustandsdaten mit Ursprung mechanischer Strang, Frequenzumrichter, Versorgungsnetz, etc.. Diese Analyse und Diagnose erfolgt entweder lokal oder über Fernwartung. Die vollständige Integration, über die reine Schnittstellenkonfiguration hinausgehend, von Zustandsüberwachungssystemen und die Integration dezidierter Applikationen in das Überwachungs- und Diagnosesystem ist möglich, falls erforderlich.

Das kontinuierliche Fern- oder Vorort-Überwachungs- und Diagnosesystem für Fluidenergiemaschinensysteme, wie elektrisch angetriebene Pumpen bzw. Kompressorensysteme, ermöglicht die subsystemübergreifende ganzheitliche Diagnose der betreffenden Anlagen und Anlagenkomponenten.

Wesentliche Merkmale und Vorteile des Überwachungs- und Diagnosesystem für Fluidenergiemaschinensysteme, insbesondere für elektrisch angetriebene Pumpen bzw. Kompressorensysteme, sind:
a) Die Bereitstellung der erforderlichen Schnittstellen und Protokolle zur Integration der vorstehend genannten Subsysteme, inklusive der Nebenanlagen. Somit sind keine proprietären aufwendigen Anpassungen erforderlich.
b) Das Sammeln und konsistente Aufzeichnen der relevanten Daten, Informationen und Alarme von den Automatisierungssystemen der Subsysteme beziehungsweise direkt von den Subsystemen. Dadurch ist die zeitliche Konsistenz zur Bestimmung von Ursache und Wirkung gegeben und eine Klassifizierung der Informationen auch im Vorgriff eines Schadenfalles gegeben. Insgesamt werden dadurch die Analyse/Diagnose-Zeiten und - Kosten wesentlich reduziert.
c) Das Archivieren der relevanten Daten und Alarme unabhängig von den Möglichkeiten und Limitierungen der Subsysteme. Dadurch wird erst die Möglichkeit geschaffen mit der Anlagenhistorie zu vergleichen. Dies ist eine Notwendigkeit, insbesondere um modellgestützte Diagnoseapplikationen zu entwickeln.
d) Die Diagnose zur Empfehlung und Benachrichtigung auf einer abgestimmten systemübergreifenden Basis, beispielsweise Zeitstrahl, Betriebsmodi und Anlagenfahrweisen, mittels Analyse und Kreuzkorrelation der Subsysteme und Nebenanlagendaten und -alarme zusammen mit Betriebs- und Unternehmungsführungssystemen. Das ermöglicht die ganzheitliche Zustandsüberwachung und zustandsbasierte Klassifizierung des Fluidenergiemaschinensystems beziehungsweise des Pumpen- oder Kompressorsystems sowie der einzelnen Anlagenkomponenten. Es werden aktuelle zustandsabhängige Kennzahlen berechnet und die zustandsbasierte vorausschauende Instandhaltung unterstützt.
e) Die Analyse des Anlagenzustandes und der Anlagenkomponenten mittels modellgestützter Bewertung unter Berücksichtigung historischer Betriebs- und Fehlerszenarien. Das Heranziehen von Diagnosemodellen zur Zustandsüberwachung ermöglicht die Kodierung von Anlagenwissen und die kontinuierliche angepasste Anwendung.
f) Das Überwachungs- und Diagnosesystem bildet den zentralen Anlaufpunkt für die lokale und/oder Fernwartung und - instandhaltung für alle relevanten Subsysteme der Anlagen und -komponenten. Die Diagnose kann zeit- und kostenminimal durchgeführt werden, insbesondere auch in Hinblick auf den Lebenszyklus des Diagnose-Systems.
g) Eine integrierte ganzheitliche Analyse und Diagnose der kritischen mechanischen, elektrischen, instrumentierungstechnischen, automatisierungstechnischen Komponenten der Pumpen-und Kompressorsystems inklusive Nebenanlagen.
Die zustandsbasierte Überwachung lediglich eines Pumpen- und Kompressorstranges, wie in Stand der Technik bekannt, kann zwar frühzeitig sich anbahnende Lagerschäden voraussagen, bleibt aber natürlicherweise auf den Strang beschränkt und kann abnormale Zustände im Prozess selbst, im elektrischen Versorgungsnetz oder in den Nebenanlagen nicht berücksichtigen. Hier greift das erfindungsgemäße Überwachungs- und Diagnosesystem durch ganzheitliche übergreifende Analyse und Klassifizierung sowie Überwachung von Netzwerkstörungen, Kühlmittelständen, Filterverschmutzungen, Verstopfungen von Rohrleitungen etc., um weitergehende fatale Anlagenausfälle vorausschauend zu vermeiden.

Durch kontinuierliche ganzheitliche Systemüberwachung und - klassifizierung wird das Wissen über den aktuellen Anlagenzustand des Fluidenergiemaschinensystems inklusive der Subsysteme und Anlagenkomponenten wesentlich erweitert. Zum Beispiel ermöglicht der Vergleich und die Korrelation von Betriebsmodi und -perioden gegen die Verfügbarkeit und Zuverlässigkeit von Anlagenkomponenten und -systemen die quantitative Möglichkeit die mittlere störungsfreie Betriebszeit und die Ausfallkriterien kontinuierlich zu aktualisieren.

Das Fluidenergiemaschinensystem, insbesondere ein Pumpensystem, umfasst insbesondere eine Arbeitsmaschine, wie eine Pumpe, wenigstens eine Wellenkupplung, wenigstens einen elektrischen Motor, wenigstens einen Frequenzumrichter und wenigstens eine Umspannstation. Des Weiteren können Nebenanlagen, wie beispielsweise Schmierölsysteme, Spülluftsysteme, Kühlsysteme, beispielsweise für den Frequenzumrichter, integriert werden. Die Arbeitsmaschine wird mittels einer Steuereinheit, insbesondere einer Anlagenkontrolleinheit, der Überwachungs- und Diagnosesystem gesteuert und geregelt. Daneben existieren diskrete Regeleinheiten für die Anlagenkomponenten, wie den Motor, den Frequenzumrichter, die Schaltanlage und andere Nebenanlagen. Diese Subsysteme liefern relevante Daten und Informationen für das Überwachungs- und Diagnosesystem. Als weitere Daten- und Informationsquellen können weiterhin ein elektronisches Anlagenfahrer-Logbuch und Betriebs- und Unternehmensführungssysteme, beispielsweise für die Instandhaltung, zur Verfügung stehen.

Die folgenden Messwerte, Daten, Alarme, Schnittstellen, ohne sich zu beschränken, werden zum erfindungsgemäßen Überwachungs- und Diagnosesystem geführt:
a) Von einer Umspannstation: Spannungen und Ströme (primär-/ sekundärseitig) und/oder Phasenwinkel. Ferner Alarm-, Fehler-, Zustandsmeldungen der Schaltanlagen, Blindleistungskompensatoren, Transformatoren und/oder harmonischen Filtern.
b) Von einem Frequenzumrichter: Spannungen und -oberwellen, Ströme und -oberwellen, Effektivwerte von Strom und Spannung, Phasenwinkel, Schein-, Blind-, Wirkleistungen, Drehmomente, Drehzahlen (Ist- und Sollwert), Umrichterwirkungsgrade und/oder Alarm-, Fehler-, Zustandsmeldungen des Frequenzumrichtersystems.
c) Von einer Motorsteuereinheit: Spannungen, Ströme, Phasenwinkel, Schein-, Blind-, Wirkleistungen, Drehmomente, Motorwirkungsgrade, Wicklungstemperaturen, Alarm-, Fehler-, Zustandsmeldungen des Motors,
d) Von einer Zustandsüberwachung einer rotierenden Maschine: Lagertemperaturen, Gehäusetemperaturen, Schwingungsdaten von radialen oder axialen Schwingungen und/oder Alarm-, Fehler-, Zustandsmeldungen.
e) Von den Nebenanlagen: Kühlmitteltemperaturen, -drücke oder -stände, Umgebungslufttemperaturen, Differenzdrücke von Filtern, Schmieröldrücke, Hilfsmittelmengenströme und/oder Alarm-, Fehler-, Zustandsmeldungen.
f) Von einer Anlagensteuereinheit: Durchflussmengen, Prozesstemperaturen, Prozessdrücke. Prozessqualitäten, und/oder Alarm-, Fehler-, Zustandsmeldungen.
g) Von einem Anlagenfahrer-Logbuch: Betriebsmodi, Anlagenfahrerbeobachtungen und -einträge, Abnormale Betriebs- und Anlagenbedingungen, Instandhaltungssysteme, Wartungsintervalle, - vorschriften, -handbücher, Wartungspersonal- und Ersatzteilplanungen, Datenblätter der Anlagenkomponenten, -apparate und -maschinen und/oder technische Zeichnungen und Handbücher.
h) Datenschnittstellen, wobei die Datenübertragung zwischen den Subsystemen sowohl synchron als auch asynchron erfolgen kann. Die Datenübertragung kann über Kabel (4 - 20 mA), Ethernet; Profibusse; Feldbusse und/oder Modbusse erfolgen. Die Datenübertragung kann auch kabellos erfolgen.

Das erfindungsgemäße Überwachungs- und Diagnosesystem stellt vorzugsweise eine Fernwartungsfunktionalität über eine Fernwartungsplattform bereit. Das beschriebene Überwachungs- und Diagnosesystem sammelt und zeichnet die relevanten Daten und Alarme aus den diskreten Subsystemen und Anlagekomponenten auf. Bei Bedarf können auch zusätzliche Sensoren sowie weitere Subsysteme in das Überwachungs- und Diagnosesystem eingebunden werden. Das beschriebene Überwachungs- und Diagnosesystem analysiert, korreliert, vergleicht, erzeugt Diagramme ebenso wie Diagnose-Indikatoren, insbesondere subsystemübergreifende, mit Alarm- und Warnschwellen.

Bei Über- oder Unterschreiten definierbarer Schwellwerte löst das Überwachungs- und Diagnosesystem eigene Warnungen und Alarme aus und erstellt elektronische Telegramme, beispielsweise zur Information von Anlagenfahrern, Instandhaltungspersonal oder Wartungspersonal oder zur Einkopplung von Betriebs- und Unternehmungsführungssystemen.

Weiterhin ermöglicht das beschriebene Diagnose-System die Klassifizierung des Anlagenzustandes basierend auf Erfahrungstabellen. Sollte zum Beispiel der Wirkungsgrad der Pumpe einen unteren Schwellwert unterschreiten können aus solchen Erfahrungstabellen die wahrscheinlichen prozesstechnischen, mechanischen, elektrischen oder automatisierungstechnischen Ursachen abgeleitet und entsprechende Instandhaltungsaktivitäten ausgelöst und geplant werden.

Die Erfindung und ihre Weiterbildungen sowie deren Vorteile werden nachfolgend anhand von Zeichnungen näher erläutert. Es zeigen jeweils schematisch:
- Figur 1: ein Fluidenergiemaschinensystem mit einem Vorort- und/oder Fern-Überwachungs- und Diagnosesystem, das nach dem erfindungsgemäßen Konstruktionsprinzip ausgebildet ist.
- Figur 2: ein Überwachungs- und Diagnosesystem für ein Fluidenergiemaschinensystem, wobei das Überwachungs- und Diagnosesystem nach dem erfindungsgemäßen Konstruktionsprinzip ausgebildet ist,
- Figur 3: eine Architekturdarstellung eines Überwachungs- und Diagnosesystems, am Beispiels eines elektrischen Pumpensystems,
- Figur 4: einen zeitlichen Verlauf einer beispielhaften Kennzahl mit Warn- und Alarmschwellen,
- Figur 5: eine exemplarische Zuordnungstabelle zur Klassifizierung von Fehlerursachen.

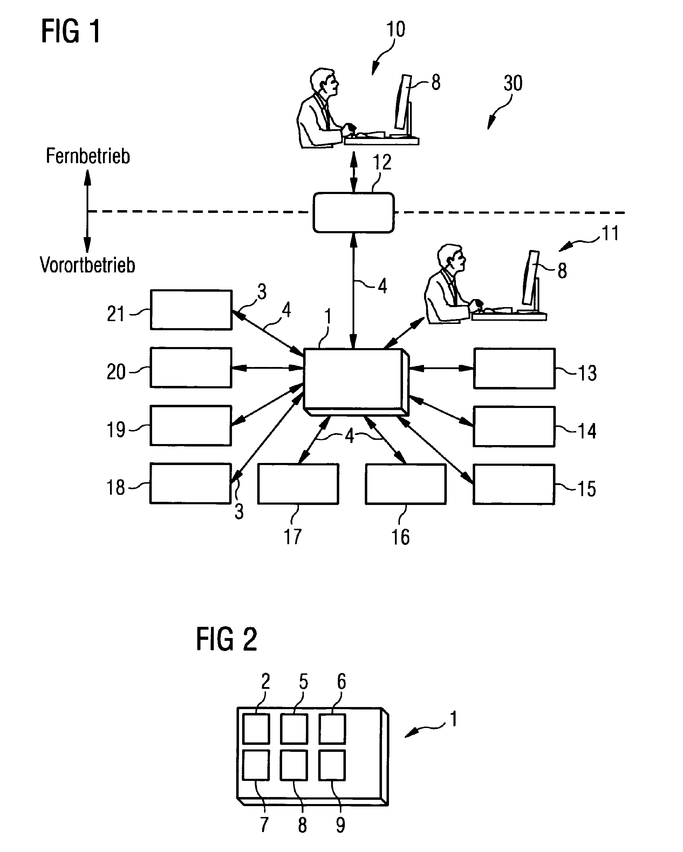

Elemente mit gleicher Funktion und Wirkungsweise sind in den Figuren 1 bis 5 jeweils mit denselben Bezugszeichen versehen.

Fig. 1 zeigt schematisch ein Fluidenergiemaschinensystem 30 mit einem Vorort- und/oder Fern-Überwachungs- und Diagnosesystem 1, das nach dem erfindungsgemäßen Konstruktionsprinzip ausgebildet ist. Das Fern- und/oder Vorort-Überwachungs- und Diagnosesystem 1 für das Fluidenergiemaschinensystem 30, wie ein elektrisch angetriebenes Pumpen- bzw. Kompressorsystem, integriert und ergänzt bestehende Subsysteme, wie beispielsweise Automatisierungssysteme 18, Nebenanlagen 16, Stationen und Anlagen 19 und Anlagenkomponenten, wie, Frequenzumrichter 14, Schaltanlagen beziehungsweise Umspannstationen 13, Motorsteuereinheiten 15, etc., mit Zustandsüberwachungssystemen 17 für rotierende Maschinen, Instandhaltungs- 25, Betriebsführungs-, Unternehmensplanungssoftwaresysteme 21, etc.. Das erfindungsgemäße Überwachungs- und Diagnosesystem 1 ermöglicht die zeitnahe Unterstützung der Betriebsführung, insbesondere auch der Instandhaltung in Hinblick auf zustandsbasierte und vorausschauende Betriebsführungs- und Instandhaltungsstrategien.

Das Überwachungs- und Diagnosesystem 1 des Fluidenergiemaschinensystems 30 umfasst insbesondere standardisierte bidirektionale Schnittstellen 3 zur Kommunikation mit den Subsystemen 16, 17, 18, 19, 20, 21, 22, 25, 26 und Anlagekomponenten 13, 14, 15, 23, 24 beispielsweise zur Daten- und Alarmübertragung. Entsprechende Interfaces und Protokolle, insbesondere TCP/IP-Protokolle, Profibusse, Feldbusse, Modbusse, direkte analoge Kabelverbindungen, etc., werden von dem Überwachungs- und Diagnosesystem 1 bereitgestellt. Das Datensammeln und die Datenspeicherung erfolgt in einer Speichereinrichtung 5 der zentralen Rechnereinheit 2 beziehungsweise in Datenbanken, Dies erfolgt entweder online und in Echtzeit oder ereignisgesteuert mit angepassten Abtastraten im Überwachungs- und Diagnosesystem 1. Die Datenverarbeitung der gesammelten zeitgestempelten Daten und Alarme zur Analyse und zur Diagnose erfolgt basierend auf Zeitreihen, Prozessmodellen, speziellen Kennzahlen usw. im Überwachungs- und Diagnosesystem 1. Ferner erfolgt in der Speichereinrichtung 5 der zentralen Rechnereinheit 2 des Überwachungs- und Diagnosesystems 1 eine Archivierung der gesammelten Zeitreihen zur Analyse und Diagnose. Das Überwachungs- und Diagnosesystem 1 ermöglicht ferner eine applikationsgestützte Analyse der archivierten Zeitreihen und Alarme zur Diagnose auch im Vergleich zu historischen Fahrweisen. Über die Sensorelemente kann ein direkter Zugriff auf aktuelle Kennzahlen, insbesondere bezüglich Anlagenzustände und -effizienz, erfolgen. Das Überwachungs- und Diagnosesystem 1 ist ferner ausgebildet zur automatischen Erstellung elektronischer Telegramme für lokales und/oder Fern-Wartungs- und Servicepersonal, aber auch für elektronische Betriebsführungssysteme 21 mittels des Überwachungs- und Diagnosesystems 1.

Das erfindungsgemäße Überwachungs- und Diagnosesystem 1 erlaubt sowohl lokale als auch Fernzugriffe. Beispielsweise ermöglicht das subsystemübergreifende Überwachungs- und Diagnosesystem 1 die zeitnahe und zeitkonsistente Analyse und Archivierung der Zustandsdaten mit Ursprung mechanischer Strang 23, Frequenzumrichter 13, Versorgungsnetz 26, etc.. Diese Analyse und Diagnose erfolgt entweder lokal oder über Fernwartung. Die vollständige Integration, über die reine Schnittstellenkonfiguration hinausgehend, von Zustandsüberwachungssystemen 17 und die Integration dezidierter Applikationen in das Überwachungs- und Diagnosesystem 1 ist möglich, falls erforderlich.

In der Fig. 2 ist schematisch ein Überwachungs- und Diagnosesystem1 für ein Fluidenergiemaschinensystem 30 gezeigt, wobei das Überwachungs- und Diagnosesystem 1 nach dem erfindungsgemäßen Konstruktionsprinzip ausgebildet ist. Das Überwachungs- und Diagnosesystem 1 weist eine zentrale Rechnereinheit 2 auf. Ferner ist eine Steuereinrichtung 5 zur Ansteuerung von Sensorelementen vorgesehen. Des Weiteren ist eine Speichereinrichtung 6 zur Speicherung von von den Sensorelementen ermittelten Zustandsdaten des jeweiligen Subsystems 16, 17, 18, 19, 20, 21, 22, 25, 26 und der jeweiligen Anlagenkomponente 13, 14, 15, 23, 24 sowie zur Speicherung von Vergleichsdaten zum Betreiben des Fluidenergiemaschinensystems 30 vorgesehen. Ebenso ist eine Komparatoreinheit 7 zum Vergleich der ermittelten Zustandsdaten des jeweiligen Subsystems und der jeweiligen Anlagenkomponente mit definierten Schwellwerten für jedes Subsystem und jede Anlagenkomponente vorgesehen ist. Das Überwachungs- und Diagnosesystem 1 weist ferner eine Anzeigeeinrichtung 8 zur Anzeige der ermittelten Zustandsdaten des jeweiligen Subsystems und der jeweiligen Anlagenkomponente sowie zur Anzeige eines Alarms bei Unter- oder Überschreitung eines Schwellwertes bei einem Subsystem oder einer Anlagenkomponente auf.

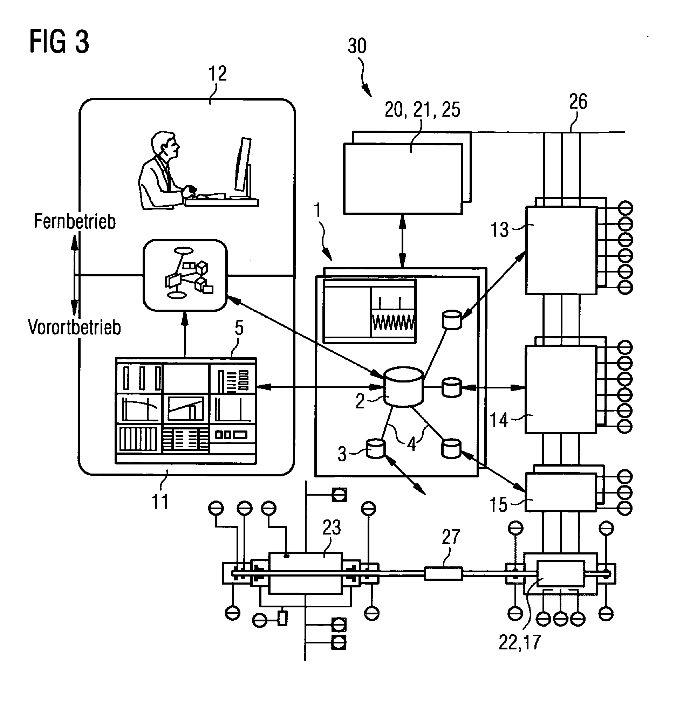

In Fig. 3 ist eine Architekturdarstellung eines Überwachungs- und Diagnosesystems 1 am Beispiel eines elektrischen Pumpensystems 30 schematisch dargestellt. Das Fluidenergiemaschinensystem 30 umfasst insbesondere eine Arbeitsmaschine 23, wie eine Pumpe oder Kompressor, wenigstens eine Wellenkupplung gegebenenfalls zusammen mit einem Getriebe konstanter oder variabler Übersetzung 27, wenigstens einen elektrischer Motor 15, wenigstens einen Frequenzumrichter 14 und wenigstens eine Umspannstation 13. Des Weiteren können Nebenanlagen, wie beispielsweise Schmierölsysteme, Spülluftsysteme, Kühlsysteme, beispielsweise für den Frequenzumrichter 13, vorgesehen. Die Arbeitsmaschine 23 wird mittels einer Steuereinheit 5, insbesondere einer Anlagenkontrolleinheit, der Überwachungs- und Diagnosesystem 1 gesteuert und geregelt. Daneben existieren diskrete Regeleinheiten für die Anlagenkomponenten, wie den Motor 15, den Frequenzumrichter 14, die Schaltanlage beziehungsweise Umspannstation 13 und andere Nebenanlagen. Diese Subsysteme und Anlagekomponenten liefern relevante Daten und Informationen für das Überwachungs- und Diagnosesystem 1. Als weitere Daten- und Informationsquellen können weiterhin ein elektronisches Anlagenfahrer-Logbuch 20 und Betriebs- und Unternehmensführungssysteme 21, 25, beispielsweise für die Instandhaltung, zur Verfügung stehen.

Folgende Messwerte, Daten, Alarme, Schnittstellen, ohne sich zu beschränken, werden zum erfindungsgemäßen Überwachungs- und Diagnosesystem 1 geführt:
a) Von der Umspannstation 13: Spannungen und Ströme (primär-/sekundärseitig) und/oder Phasenwinkel. Ferner Alarm-, Fehler-, Zustandsmeldungen der Schaltanlagen, Blindleistungskompensatoren, Transformatoren und/oder harmonischen Filtern.
b) Von dem Frequenzumrichter 14: Spannungen und -oberwellen, Ströme und -oberwellen, Effektivwerte von Strom und Spannung, Phasenwinkel, Schein-, Blind-, Wirkleistungen; Drehmomente, Drehzahlen (Ist- und Sollwert), Umrichterwirkungsgrade und/oder Alarm-, Fehler-, Zustandsmeldungen des Frequenzumrichtersystems.
c) Von dem Motor 15 und der zugehörigen Motorsteuereinheit: Spannungen, Ströme, Phasenwinkel, Schein-, Blind-, Wirkleistungen, Drehmomente, Motorwirkungsgrade, Wicklungstemperaturen, Alarm-, Fehler-, Zustandsmeldungen des Motors,
d) Von der Zustandsüberwachung 17 einer rotierenden Maschine 22: Lagertemperaturen, Gehäusetemperaturen, Schwingungsdaten von radialen oder axialen Schwingungen und/oder Alarm-, Fehler-, Zustandsmeldungen.
e) Von nicht dargestellten Nebenanlagen: Kühlmitteltemperaturen, -drücke oder -stände, Umgebungslufttemperaturen, Differenzdrücke von Filtern, Schmieröldrücke und/oder Alarm-, Fehler-, Zustandsmeldungen.
f) Von einer Anlagensteuereinheit der Pumpe 23: Durchflussmengen, Prozesstemperaturen, Prozessdrücke. Prozessqualitäten, und/oder Alarm-, Fehler-, Zustandsmeldungen.
g) Von dem Anlagenfahrer-Logbuch 20: Betriebsmodi, Anlagenfahrerbeobachtungen und -einträge, Abnormale Betriebs- und Anlagenbedingungen, Instandhaltungssysteme, Wartungsintervalle, -vorschriften, -handbücher, Wartungspersonal- und Ersatzteilplanungen, Datenblätter der Anlagenkomponenten, -apparate und -maschinen und/oder technische Zeichnungen und Handbücher.

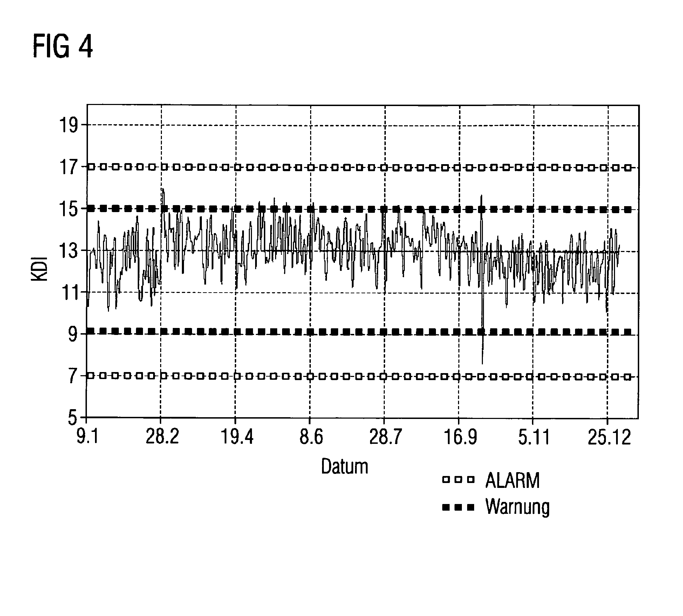

Fig. 4 zeigt schematisch einen zeitlichen Verlauf einer beispielhaften Kennzahl KDI mit Warn- und Alarmschwellen. Bei Über- oder Unterschreiten definierbarer Schwellwerte löst das Überwachungs- und Diagnosesystem 1 eigene Warnungen und Alarme aus und erstellt elektronische Telegramme, beispielsweise zur Information von Anlagenfahrern, Instandhaltungspersonal oder Wartungspersonal oder zur Einkopplung von Betriebs- und Unternehmungsführungssystemen.

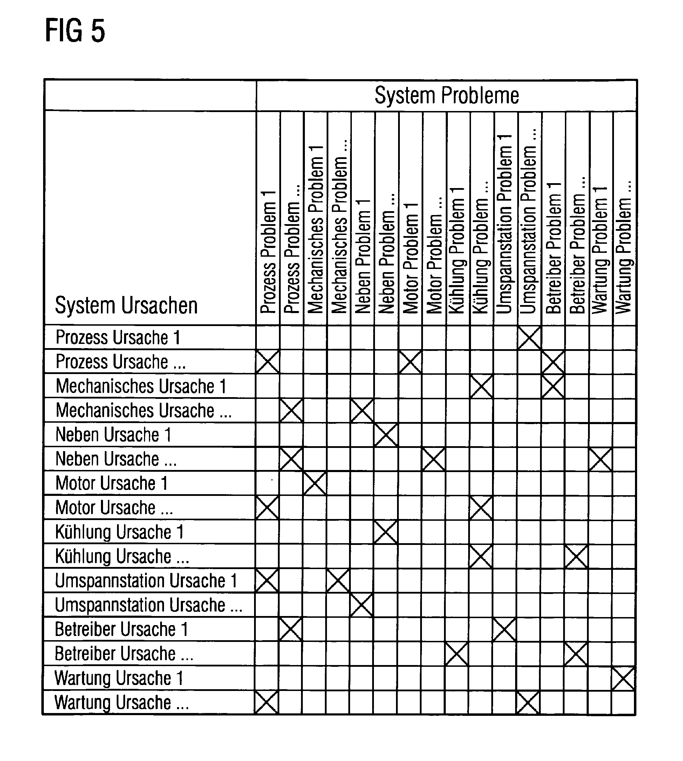

Weiterhin ermöglicht das beschriebene Überwachungs- und Diagnosesystem 1 die Klassifizierung des Anlagenzustandes des Fluidenergiemaschinensystems 30 basierend auf Erfahrungstabellen, sie in Fig. 5 dargestellt. Sollte zum Beispiel der Wirkungsgrad der Pumpe 23 einen unteren Schwellwert unterschreiten können aus solchen Erfahrungstabellen die wahrscheinlichen prozesstechnischen, mechanischen, elektrischen oder automatisierungstechnischen Ursachen abgeleitet und entsprechende Instandhaltungsaktivitäten ausgelöst und geplant werden.

## Patentansprüche

1. Überwachungs- und Diagnosesystem (1) für ein Fluidenergiemaschinensystem (30), wobei das Fluidenergiemaschinensystem (30) eine Vielzahl unterschiedlicher Subsysteme (16, 17, 18, 19, 20, 21, 22, 25, 26) und Anlagenkomponenten (13, 14, 15, 23, 24) aufweist, wobei
- das Überwachungs- und Diagnosesystem (1) eine zentrale Rechnereinheit (2) aufweist,
- jedes Subsystem (16, 17, 18, 19, 20, 21, 22, 25, 26) und jede Anlagenkomponente (13, 14, 15, 23, 24) über standardisierte bidirektionale Schnittstellen (3) und über eine oder mehrere Datenleitungen (4) mit der zentralen Rechnereinheit (2) zur Datenkommunikation verbindbar ist,
- jedes Subsystem (16, 17, 18, 19, 20, 21, 22, 25, 26) und jede Anlagenkomponente (13, 14, 15, 23, 24) wenigstens ein Sensorelement zur Ermittlung von Zustandsdaten des jeweiligen Subsystems (16, 17, 18, 19, 20, 21, 22, 25, 26) und der jeweiligen Anlagenkomponente (13, 14, 15, 23, 24) aufweist,
- wenigstens eine Steuereinrichtung (5) zur Ansteuerung der Sensorelemente vorgesehen ist,
- eine Speichereinrichtung (6) zur Speicherung der ermittelten Zustandsdaten des jeweiligen Subsystems (16, 17, 18, 19, 20, 21, 22, 25, 26) und der jeweiligen Anlagenkomponente (13, 14, 15, 23, 24) sowie zur Speicherung von Vergleichsdaten zum Betreiben des Fluidenergiemaschinensystems (30) vorgesehen ist,
- eine Komparatoreinheit (7) zum Vergleich der ermittelten Zustandsdaten des jeweiligen Subsystems (16, 17, 18, 19, 20, 21, 22, 25, 26) und der jeweiligen Anlagenkomponente (13, 14, 15, 23, 24) mit definierten Schwellwerten für jedes Subsystem (16, 17, 18, 19, 20, 21, 22, 25, 26) und jede Anlagenkomponente (13, 14, 15, 23, 24) vorgesehen ist, und
- eine Anzeigeeinrichtung (8) zur Anzeige der ermittelten Zustandsdaten des jeweiligen Subsystems (16, 17, 18, 19, 20, 21, 22, 25, 26) und der jeweiligen Anlagenkomponente (13, 14, 15, 23, 24) sowie zur Anzeige eines Alarms bei Unter- oder Überschreitung eines Schwellwertes bei einem Subsystem (16, 17, 18, 19, 20, 21, 22, 25, 26) oder einer Anlagenkomponente (13, 14, 15, 23, 24) vorgesehen ist.

2. Überwachungs- und Diagnosesystem (1) nach Anspruch 1, **dadurch gekennzeichnet, dass** die zentrale Rechnereinheit (2) kabelgebundene oder kabellose Schnittstellen zur Vorort- und/oder Fernansteuerung der zentrale Rechnereinheit (2) aufweist.

3. Überwachungs- und Diagnosesystem (1) nach mindestens einem der vorhergehenden Ansprüche 1 oder 2, **dadurch gekennzeichnet, dass** zur Datenkommunikation zwischen den jeweiligen Subsystemen (16, 17, 18, 19, 20, 21, 22, 25, 26) sowie den jeweiligen Anlagenkomponenten (13, 14, 15, 23, 24) und der zentralen Rechnereinheit (2) Internetprotokolle, Gateways und/oder Bussysteme vorgesehen sind.

4. Überwachungs- und Diagnosesystem (1) nach mindestens einem der vorhergehenden Ansprüche 1 bis 3, **dadurch gekennzeichnet, dass** die wenigstens eine Steuereinrichtung (5) zur Ansteuerung der Sensorelemente mit der zentralen Rechnereinheit (2) verbunden ist.

5. Überwachungs- und Diagnosesystem (1) nach mindestens einem der vorhergehenden Ansprüche 1 bis 4, **dadurch gekennzeichnet, dass** die Komparatoreinheit (7) eine Analyseeinrichtung (9) zur Betrachtung von ermittelten Zustandsdaten wenigstens eines Subsystems (16, 17, 18, 19, 20, 21, 22, 25, 26) oder wenigstens einer Anlagenkomponente relativ zu anderen Subsystemen (16, 17, 18, 19, 20, 21, 22, 25, 26) oder Anlagenkomponenten (13, 14, 15, 23, 24) des Fluidenergiemaschinensystems (30) aufweist.

6. Überwachungs- und Diagnosesystem (1) nach mindestens einem der vorhergehenden Ansprüche 1 bis 5, **dadurch gekennzeichnet, dass** die Anzeigeeinrichtung (8) zur akustischen und/oder optischen Anzeige eines Alarms ausgebildet ist.

7. Überwachungs- und Diagnosesystem (1) nach mindestens einem der vorhergehenden Ansprüche 1 bis 6, **dadurch gekennzeichnet, dass** die zentrale Rechnereinheit (2) zur Erstellung von elektronischen Telegrammen ausgebildet ist.

8. Fluidenergiemaschinensystem (30) mit einem Überwachungs- und Diagnosesystem (1), das nach mindestens einem der vorhergehenden Ansprüche 1 bis 7 ausgebildet ist, wobei das Fluidenergiemaschinensystem (30) eine Vielzahl unterschiedlicher Subsysteme (16, 17, 18, 19, 20, 21, 22, 25, 26) und Anlagenkomponenten (13, 14, 15, 23, 24) aufweist, wobei jedes Subsystem (16, 17, 18, 19, 20, 21, 22, 25, 26) und jede Anlagenkomponente (13, 14, 15, 23, 24) jeweils wenigstens ein Sensorelement zur Ermittlung von Zustandsdaten des jeweiligen Subsystems (16, 17, 18, 19, 20, 21, 22, 25, 26) und der jeweiligen Anlagenkomponente (13, 14, 15, 23, 24) aufweist.

9. Fluidenergiemaschinensystem (30) nach Anspruch 8, **dadurch gekennzeichnet, dass** das Fluidenergiemaschinensystem (30) eine Fluidenergiemaschine (23) sowie eine Wellenkupplung (27), einen elektrischen Motor (15) mit einer Motorsteuereinheit, einen Frequenzumrichter (14) und/oder eine Umspannstation (13) umfasst.

10. Fluidenergiemaschinensystem (30) nach Anspruch 9, **dadurch gekennzeichnet, dass** das Fluidenergiemaschinensystem (30) ein Schmierölsystem, ein Spülluftsystem und/oder wenigstens ein Kühlsystem aufweist.

11. Verfahren zur Überwachung- und Diagnose eines Fluidenergiemaschinensystems (30), wobei das Fluidenergiemaschinensystem (30) eine Vielzahl unterschiedlicher Subsysteme (16, 17, 18, 19, 20, 21, 22, 25, 26) und Anlagenkomponenten (13, 14, 15, 23, 24) aufweist, mittels eines Überwachungs- und Diagnosesystems (1), das nach mindestens einem der vorhergehenden Ansprüche 1 bis 7 ausgebildet ist.

12. Verfahren zur Überwachung- und Diagnose eines Fluidenergiemaschinensystems (30) nach Anspruch 11, **dadurch gekennzeichnet, dass** eine zentrale Rechnereinheit (2) über standardisierte bidirektionale Schnittstellen (3) und über eine oder mehrere Datenleitungen (4) mit jedem Subsystem (16, 17, 18, 19, 20, 21, 22, 25, 26) und jeder Anlagenkomponente (13, 14, 15, 23, 24) kommuniziert, wobei das wenigstens eine Sensorelement der jeweiligen Subsysteme (16, 17, 18, 19, 20, 21, 22, 25, 26) sowie der jeweiligen Anlagenkomponenten (13, 14, 15, 23, 24) von wenigstens einer Steuereinrichtung (5), die mit der zentrale Rechnereinheit (2) verbunden ist, zur Ermittlung von Zustandsdaten des jeweiligen Subsystems (16, 17, 18, 19, 20, 21, 22, 25, 26) und der jeweiligen Anlagenkomponente (13, 14, 15, 23, 24) angesteuert werden, dass die von den jeweiligen Sensorelementen ermittelten Zustandsdaten der jeweiligen Subsysteme (16, 17, 18, 19, 20, 21, 22, 25, 26) und der jeweiligen Anlagenkomponenten (13, 14, 15, 23, 24) sowie Vergleichsdaten zum Betreiben des Fluidenergiemaschinensystems (30) in einer Speichereinrichtung (6) gespeichert werden, dass die Komparatoreinheit (7) die ermittelten Zustandsdaten des jeweiligen Subsystems (16, 17, 18, 19, 20, 21, 22, 25, 26) und der jeweiligen Anlagenkomponenten (13, 14, 15, 23, 24) mit definierten Schwellwerten für jedes Subsystem (16, 17, 18, 19, 20, 21, 22, 25, 26) und jede Anlagenkomponente (13, 14, 15, 23, 24) vergleicht, und dass eine Anzeigeeinrichtung (8) die ermittelten Zustandsdaten des jeweiligen Subsystems (16, 17, 18, 19, 20, 21, 22, 25, 26) und der jeweiligen Anlagenkomponente (13, 14, 15, 23, 24) sowie einen Alarm bei Unter- oder Überschreitung eines Schwellwertes bei einem Subsystem (16, 17, 18, 19, 20, 21, 22, 25, 26) oder einer Anlagenkomponente (13, 14, 15, 23, 24) anzeigt.

## Claims

1. Monitoring and diagnostic system (1) for a fluid energy machine system (30), wherein the fluid energy machine system (30) comprises a plurality of different sub-systems (16, 17, 18, 19, 20, 21, 22, 25, 26) and system components (13, 14, 15, 23, 24), wherein
- the monitoring and diagnostic system (1) has a central processing unit (2),
- each sub-system (16, 17, 18, 19, 20, 21, 22, 25, 26) and each system component (13, 14, 15, 23, 24) can be connected via standardised bi-directional interfaces (3) and via one or more data lines (4) to the central processing unit (2) for the purpose of data communication,
- each sub-system (16, 17, 18, 19, 20, 21, 22, 25, 26) and each system component (13, 14, 15, 23, 24) has at least one sensor element for determining status information for the respective sub-system (16, 17, 18, 19, 20, 21, 22, 25, 26) and the respective system component (13, 14, 15, 23, 24),
- at least one control device (5) is provided for controlling the sensor elements,
- a memory device (6) is provided for storing the status information determined for the respective sub-system (16, 17, 18, 19, 20, 21, 22, 25, 26) and the respective system component (13, 14, 15, 23, 24) and also for storing comparison data for the purpose of operating the fluid energy machine system (30),
- a comparator unit (7) is provided for comparing the status information determined for the respective sub-system (16, 17, 18, 19, 20, 21, 22, 25, 26) and the respective system component (13, 14, 15, 23, 24) with defined threshold values for each sub-system (16, 17, 18, 19, 20, 21, 22, 25, 26) and each system component (13, 14, 15, 23, 24), and
- a display device (8) is provided for displaying the status information determined for the respective sub-system (16, 17, 18, 19, 20, 21, 22, 25, 26) and the respective system component (13, 14, 15, 23, 24), and also for displaying an alarm in the event of an undershoot or overshoot of a threshold value in the case of a sub-system (16, 17, 18, 19, 20, 21, 22, 25, 26) or a system component (13, 14, 15, 23, 24).

2. Monitoring and diagnostic system (1) according to claim 1, **characterised in that** the central processing unit (2) has hard-wired or wireless interfaces for local and/or remote control of the central processing unit (2).

3. Monitoring and diagnostic system (1) according to at least one of the preceding claims 1 or 2, **characterised in that** Internet protocols, gateways and/or bus systems are provided for the purpose of data communication between the respective sub-systems (16, 17, 18, 19, 20, 21, 22, 25, 26) and also the respective system components (13, 14, 15, 23, 24) and the central processing unit (2).

4. Monitoring and diagnostic system (1) according to at least one of the preceding claims 1 to 3, **characterised in that** said at least one control device (5) is connected to the central processing unit (2) for the purpose of controlling the sensor elements.

5. Monitoring and diagnostic system (1) according to at least one of the preceding claims 1 to 4, **characterised in that** the comparator unit (7) has an analysis device (9) for reviewing status information determined for at least one sub-system (16, 17, 18, 19, 20, 21, 22, 25, 26) or at least one system component relative to other sub-systems (16, 17, 18, 19, 20, 21, 22, 25, 26) or system components (13, 14, 15, 23, 24) of the fluid energy machine system (30).

6. Monitoring and diagnostic system (1) according to at least one of the preceding claims 1 to 5, **characterised in that** the display device (8) is designed for acoustic and/or optical display of an alarm.

7. Monitoring and diagnostic system (1) according to at least one of the preceding claims 1 to 6, **characterised in that** the central processing unit (2) is designed for creating electronic telegrams.

8. Fluid energy machine system (30) with a monitoring and diagnostic system (1) that is designed in accordance with at least one of the preceding claims 1 to 7, wherein the fluid energy machine system (30) comprises a plurality of different sub-systems (16, 17, 18, 19, 20, 21, 22, 25, 26) and system components (13, 14, 15, 23, 24), each sub-system (16, 17, 18, 19, 20, 21, 22, 25, 26) and each system component (13, 14, 15, 23, 24) having in each case at least one sensor element for determining status information for the respective sub-system (16, 17, 18, 19, 20, 21, 22, 25, 26) and the respective system component (13, 14, 15, 23, 24).

9. Fluid energy machine system (30) according to claim 8, **characterised in that** the fluid energy machine system (30) encompasses a fluid energy machine (23) and also a shaft coupling (27), an electric motor (15) with a motor control unit, a frequency converter (14) and/or a transformer station (13).

10. Fluid energy machine system (30) according to claim 9, **characterised in that** the fluid energy machine system (30) has a lubricating oil system, a scavenging air system and/or at least one cooling system.

11. Method for monitoring and diagnosing a fluid energy machine system (30), wherein the fluid energy machine system (30) comprises a plurality of different sub-systems (16, 17, 18, 19, 20, 21, 22, 25, 26) and system components (13, 14, 15, 23, 24), by using a monitoring and diagnostic system (1) that is designed in accordance with at least one of the preceding claims 1 to 7.

12. Method for monitoring and diagnosing a fluid energy machine system (30) according to claim 11, **characterised in that** a central processing unit (2) communicates via standardised bi-directional interfaces (3) and via one or more data lines (4) with each sub-system (16, 17, 18, 19, 20, 21, 22, 25, 26) and each system component (13, 14, 15, 23, 24), said at least one sensor element of the respective sub-systems (16, 17, 18, 19, 20, 21, 22, 25, 26) and also of the respective system components (13, 14, 15, 23, 24) being controlled by at least one control device (5) that is connected to the central processing unit (2) for the purpose of determining status information for the respective subsystem (16, 17, 18, 19, 20, 21, 22, 25, 26) and the respective system component (13, 14, 15, 23, 24),
and that the status information determined by the respective sensor elements for the respective sub-systems (16, 17, 18, 19, 20, 21, 22, 25, 26) and the respective system components (13, 14, 15, 23, 24) and also comparison data for the purpose of operating the fluid energy machine system (30) is stored in a memory device (6),
and that the comparator unit (7) compares the status information determined for the respective sub-system (16, 17, 18, 19, 20, 21, 22, 25, 26) and the respective system components (13, 14, 15, 23, 24) with defined threshold values for each sub-system (16, 17, 18, 19, 20, 21, 22, 25, 26) and each system component (13, 14, 15, 23, 24),
and that a display device (8) displays the status information determined for the respective sub-system (16, 17, 18, 19, 20, 21, 22, 25, 26) and the respective system component (13, 14, 15, 23, 24) and also an alarm in the event of an undershoot or overshoot of a threshold value in the case of a sub-system (16, 17, 18, 19, 20, 21, 22, 25, 26) or a system component (13, 14, 15, 23, 24).

## Revendications

1. Système ( 1 ) de contrôle et de diagnostic pour un système ( 30 ) de machine à énergie fluidique, dans lequel le système ( 30 ) de machine à énergie fluidique a une pluralité de sous-systèmes ( 16, 17, 18, 19, 20, 21, 22, 25, 26 ) différents et de composants ( 13, 14, 15, 23, 24 ) d'installation différents, dans lequel
- le système ( 1 ) de contrôle et de diagnostic a une unité ( 2 ) informatique centrale,
- chaque sous-système ( 16, 17, 18, 19, 20, 21, 22, 25, 26 ) et chaque composant ( 13, 14, 15, 23, 24 ) d'installation peut être relié, pour la communication de données, à l'unité ( 2 ) informatique centrale, par des interfaces ( 3 ) bidirectionnelles normalisées par une ou par plusieurs lignes ( 4 ) de données,
- chaque sous-système ( 16, 17, 18, 19, 20, 21, 22, 25, 26 ) et chaque composant ( 13, 14, 15, 23, 24 ) d'installation a au moins un élément capteur de détermination de données d'état du sous-système ( 16, 17, 18, 19, 20, 21, 22, 25, 26 ) respectif et du composant ( 13, 14, 15, 23, 24 ) respectif d'installation,
- il est prévu au moins un dispositif ( 5 ) de commande des éléments capteurs,
- il est prévu un dispositif ( 6 ) de mémorisation des données d'état déterminées du sous-système ( 16, 17, 18, 19, 20, 21, 22, 25, 26 ) respectif et du composant ( 13, 14, 15, 23, 24 ) respectif d'installation ainsi que de mémorisation de données de comparaison pour faire fonctionner le système ( 30 ) de machine à énergie fluidique,
- il est prévu une unité ( 7 ) formant comparateur pour comparer les données d'état déterminées du sous-système ( 16, 17, 18, 19, 20, 21, 22, 25, 26 ) respectif et du composant ( 13, 14, 15, 23, 24 ) respectif d'installation à des valeurs de seuil définies pour chaque sous-système ( 16, 17, 18, 19, 20, 21, 22, 25, 26 ) et pour chaque composant ( 13, 14, 15, 23, 24 ) d'installation et
- il est prévu un dispositif ( 8 ) d'indication pour indiquer les données d'état déterminées du sous-système ( 16, 17, 18, 19, 20, 21, 22, 25, 26 ) respectif et du composant ( 13, 14, 15, 23, 24 ) respectif d'installation ainsi que pour indiquer une alerte si l'on passe en dessus ou au-dessus d'une valeur de seuil pour un sous-système ( 16, 17, 18, 19, 20, 21, 22, 25, 26 ) ou pour un composant ( 13, 14, 15, 23, 24 ) d'installation.

2. Système ( 1 ) de contrôle et de diagnostic suivant la revendication 1, **caractérisé en ce que** l'unité ( 2 ) informatique centrale a des interfaces par câble ou sans câble pour la commande sur site et/ou pour la télécommande de l'unité ( 2 ) informatique centrale.

3. Système ( 1 ) de contrôle et de diagnostic suivant au moins l'une des revendications précédentes 1 ou 2, **caractérisé en ce que**, pour la communication de données entre les sous-systèmes ( 16, 17, 18, 19, 20, 21, 22, 25, 26 ) respectifs ainsi que les composants ( 13, 14, 15, 23, 24 ) respectifs d'installation et l'unité ( 2 ) informatique centrale, il est prévu des protocoles Internet, des gateways et/ou des systèmes de bus.

4. Système ( 1 ) de contrôle et de diagnostic suivant au moins l'une des revendications précédentes 1 à 3, **caractérisé en ce que** le au moins un dispositif ( 5 ) de commande des éléments capteurs est relié à l'unité ( 2 ) informatique centrale.

5. Système ( 1 ) de contrôle et de diagnostic suivant au moins l'une des revendications précédentes 1 à 4, **caractérisé en ce que** l'unité ( 7 ) formant comparateur a un dispositif ( 9 ) d'analyse pour considérer des données d'état déterminées d'au moins un sous-système ( 16, 17, 18, 19, 20, 21, 22, 25, 26 ) ou d'au moins un composant ( 13, 14, 15, 23, 24 ) d'installation par rapport à d'autres sous-systèmes ( 16, 17, 18, 19, 20, 21, 22, 25, 26 ) ou d'autres composants ( 13, 14, 15, 23, 24 ) d'installation du système ( 30 ) de machine à énergie fluidique.

6. Système ( 1 ) de contrôle et de diagnostic suivant au moins l'une des revendications précédentes 1 à 5, **caractérisé en ce que** le dispositif ( 8 ) d'indication est constitué pour l'indication acoustique et/ou optique d'une alerte.

7. Système ( 1 ) de contrôle et de diagnostic suivant au moins l'une des revendications précédentes 1 à 6, **caractérisé en ce que** l'unité ( 2 ) informatique centrale est constituée pour la production de télégrammes électroniques.

8. Système ( 30 ) de machine à énergie fluidique ayant un système ( 1 ) de contrôle et de diagnostic est constitué suivant au moins l'une des revendications précédentes 1 à 7, le système ( 30 ) de machine à énergie fluidique ayant une pluralité de sous-systèmes ( 16, 17, 18, 19, 20, 21, 22, 25, 26 ) différents et de composants ( 13, 14, 15, 23, 24 ) d'installation différents, chaque sous-système ( 16, 17, 18, 19, 20, 21, 22, 25, 26 ) et chaque composant ( 13, 14, 15, 23, 24 ) d'installation ayant respectivement au moins un élément capteur pour déterminer des données d'état du sous-système ( 16, 17, 18, 19, 20, 21, 22, 25, 26 ) respectif et du composant ( 13, 14, 15, 23, 24 ) respectif d'installation.

9. Système ( 30 ) de machine à énergie fluidique suivant la revendication 8, **caractérisé en ce que** le système ( 30 ) de machine à énergie fluidique comprend une machine ( 23 ) à énergie fluidique ainsi qu'un accouplement ( 27 ) d'arbres à un moteur ( 15 ) électrique ayant une unité de commande du moteur, un convertisseur ( 14 ) de fréquence et/ou un poste ( 13 ) de transformation.

10. Système ( 30 ) de machine à énergie fluidique suivant la revendication 9, **caractérisé en ce que** le système ( 30 ) de machine à énergie fluidique a un système d'huile de lubrification, un système d'air de balayage et/ou au moins un système de refroidissement.

11. Procédé de contrôle et de diagnostic d'un système ( 30 ) de machine à énergie fluidique, le système ( 30 ) de machine à énergie fluidique ayant une pluralité de sous-systèmes ( 16, 17, 18, 19, 20, 21, 22, 25, 26 ) différents et de composants ( 13, 14, 15, 23, 24 ) d'installation différents, à l'aide d'un système ( 1 ) de contrôle et de diagnostic, qui est constitué suivant au moins l'une des revendications précédentes 1 à 7.

12. Procédé de contrôle et de diagnostic d'un système ( 30 ) de machine à énergie fluidique suivant la revendication 11, **caractérisé en ce qu'**une unité ( 2 ) informatique centrale communique avec chaque sous-système ( 16, 17, 18, 19, 20, 21, 22, 25, 26 ) et chaque composant ( 13, 14, 15, 23, 24 ) d'installation par l'intermédiaire d'interfaces ( 3 ) bidirectionnelles normalisées et par une ou plusieurs lignes ( 4 ) de données, le au moins un élément capteur des sous-systèmes ( 16, 17, 18, 19, 20, 21, 22, 25, 26 ) respectifs ainsi que des composants ( 13, 14, 15, 23, 24 ) respectifs d'installation étant commandé par au moins un dispositif ( 5 ) de commande, qui est relié à l'unité ( 2 ) informatique centrale, afin de déterminer des données d'état du sous-système ( 16, 17, 18, 19, 20, 21, 22, 25, 26 ) respectif et du composant ( 13, 14, 15, 23, 24 ) respectif d'installation, **en ce que** l'on mémorise, dans un dispositif ( 6 ) de mémorisation, les données d'état déterminées par les éléments capteurs respectifs des sous-systèmes ( 16, 17, 18, 19, 20, 21, 22, 25, 26 ) respectifs et des composants ( 13, 14, 15, 23, 24 ) respectifs d'installation ainsi que des données de comparaison pour faire fonctionner le système ( 30 ) de machine à énergie fluidique, **en ce que** l'unité ( 7 ) formant comparateur compare les données d'état déterminées du sous-système ( 16, 17, 18, 19, 20, 21, 22, 25, 26 ) respectif et du composant ( 13, 14, 15, 23, 24 ) respectif d'installation à des valeurs de seuil définies pour chaque sous-système ( 16, 17, 18, 19, 20, 21, 22, 25, 26 ) et pour chaque composant ( 13, 14, 15, 23, 24 ) d'installation, et **en ce qu'**un dispositif ( 8 ) d'indication indique des données d'état déterminées du sous-système ( 16, 17, 18, 19, 20, 21, 22, 25, 26 ) respectif et du composant ( 13, 14, 15, 23, 24 ) respectif d'installation ainsi qu'une alerte si l'on passe en dessous ou au-dessus d'une valeur de seuil dans un sous-système ( 16, 17, 18, 19, 20, 21, 22, 25, 26 ) ou dans un composant ( 13, 14, 15, 23, 24 ) d'installation.
